# EUROPÄISCHE PATENTSCHRIFT

(11) **EP 4 177 598 B1**
(45) Veröffentlichungstag und Bekanntmachung des Hinweises auf die Patenterteilung: **24.01.2024**
(21) Anmeldenummer: 22202439.0
(22) Anmeldetag: 19.10.2022
(51) Int. Cl.: G01N 23/20025, G01N 23/2204, G01N 23/223

(54) **VORRICHTUNG ZUM VERSCHLIESSEN DER EINGABEÖFFNUNG DER PROBENKAMMER BEI EINEM RÖNTGEN FLUORESZENZ-SPEKTROMETER**
DEVICE FOR CLOSING THE SAMPLE CHAMBER INPUT PORT IN AN X-RAY FLUORESCENCE SPECTROMETER
DISPOSITIF POUR FERMER L'OUVERTURE D'ENTRÉE DE LA CHAMBRE D'ÉCHANTILLON DANS UN SPECTROMÈTRE À FLUORESCENCE X

(30) Priorität: 08.11.2021 DE 102021212535
(43) Veröffentlichungstag der Anmeldung: 10.05.2023
(73) Patentinhaber: Bruker AXS GmbH, 76187 Karlsruhe (DE)
(72) Erfinder: Gehrlein, Wolfgang, 76761 Rülzheim (DE)
(74) Vertreter: Kohler Schmid Möbus Patentanwälte

(56) Entgegenhaltungen:
- JP-A- 2001 153 760
- JP-A- 2014 074 656
- US-A1- 2004 013 501
- US-A1- 2009 141 862

## Beschreibung

Die Erfindung betrifft eine Verschlussvorrichtung zum gasdichten Verschließen der Eingabeöffnung einer Probenkammer eines Röntgenanalysegeräts, insbesondere eines Röntgen-Fluoreszenz-Spektrometers, mittels eines auf einer linearen Führung über die Eingabeöffnung lateral verschiebbaren Schiebers.

Eine solche Verschlussvorrichtung ist aus der Druckschrift JP 6077812 B2 (= Referenz [1]) bekannt geworden. Aus den Druckschriften US2009141862 und JP2001153760 sind auch andere Verschlussvorrichtungen bekannt.

### Hintergrund der Erfindung

Die vorliegende Erfindung befasst sich ganz allgemein mit dem Bereich der Röntgenanalysegeräte und insbesondere mit Verschlussvorrichtungen zum gasdichten Verschließen von Eingabeöffnungen der Probenkammern von Röntgenanalysegeräten, wie etwa Röntgen-Fluoreszenz-Spektrometern.

Bei den meisten Röntgen-Fluoreszenz-Spektrometern wird eine Probe in einer Messkammer mit Röntgenstrahlung angeregt. Die angeregte Probe emittiert charakteristische Röntgenstrahlung, welche durch ein System verschiedener röntgenoptischer Komponenten oder mit Hilfe eines energiedispersiven Detektors analysiert wird, um die Konzentration der Elemente in der Probe zu bestimmen.

Damit die Röntgenstrahlung entlang des Strahlengangs der Röntgenstrahlung möglichst wenig abgeschwächt wird, befindet sich der Strahlengang unter Vakuum oder in einer wenig absorbierenden und chemisch inerten Atmosphäre (z. B. He oder N₂). Da im Allgemeinen auch leicht flüchtige Proben (wie beispielsweise Flüssigkeiten) untersucht werden, die nicht bei Unterdruck gemessen werden können, wird zur Spülung der Messkammer mit einem Inertgas ein -in der Regel gegenüber der Außenatmosphäre relativ geringer-Überdruck in der Messkammer erzeugt. Eine geeignete Messkammer muss daher über einen gesteuerten Verschluss verfügen, damit die Probe durch ein mehr oder weniger automatisierbares Handling-System oder von Hand in die Messposition gebracht werden und anschließend strahlendicht verschlossen sowie weiterhin -zumindest während der Messung- sowohl vakuumdicht als auch überdruckdicht verschlossen gehalten werden kann.

Eine Verschlussvorrichtung zum gasdichten Verschließen der Eingabeöffnung mittels eines Schiebers ist beispielsweise beim Röntgen-Fluoreszenz-Spektrometer "S8 TIGER Series 2" der Bruker Corporation, Billerica (Massachusetts, USA) gezeigt worden, vgl. https://www.bruker.com/de/products-and-solutions/elemental-analyzers/xrfspectrometers/s8-tiger.html (= Referenz [2]) vom 22.10.2021.

Beim TIGER wird ein Schieber in einer Führungsbahn durch eine Linearbewegung über die Eingabeöffnung der Probe geschoben. Die Führungsbahn ist so ausgeführt, dass der Schieber in der Endposition durch die Schwerkraft auf die Dichtung der Eingabeöffnung gedrückt wird. Beim Evakuieren der Probenkammer wird durch den Druckunterschied eine Kraft erzeugt, die zum Abdichten der Eingabeöffnung führt. Die Linearbewegung des Schiebers wird durch einen Hebel auf einem Gleichstrom-Getriebemotor (DC-Getriebemotor) realisiert.

Nachteilig hierbei ist jedoch, dass der Schieber nur durch sein Eigengewicht auf die Dichtung der Eingabeöffnung gedrückt wird, wodurch die Überdruck-Dichtheit nur bis zu einem sehr kleinen Differenzdruck gegenüber der Außenatmosphäre gewährleistet ist. Des Weiteren können bei Spülungen der Probenkammer mit Inertgas große Mengen an Inertgas verloren gehen, wodurch die Betriebskosten ansteigen.

Weitere Beispiele für Verschlussvorrichtungen zum gasdichten Verschließen der Eingabeöffnungen mittels eines Schiebers finden sich beispielsweise beim Röntgen-Fluoreszenz-Spektrometer "S2 PUMA Series 2", vgl. https://www.bruker.com/en/products-and-solutions/elemental-analyzers/xrfspectrometers/s2-puma-series2.html (= Referenz [3]) vom 22.10.2021, beim Röntgen-Fluoreszenz-Spektrometer "S2 POLAR", vgl. https-//www.bruker.com/en/products-and-solutions/elemental-analyzers/xrFspectrometers/s2-polar.html (= Referenz [4]) vom 22.10.2021, und beim Röntgen-Fluoreszenz-Spektrometer "S6 JAGUAR", vgl. https://www.bruker.com/en/products-and-solutions/elemental-analyzers/xrfspectrometers/s6-jaguar.html (= Referenz [5]) vom 22.10.2021, alle jeweils von der der Bruker Corporation, Billerica (Massachusetts, USA).

Die allgemeine Ausgestaltung beim PUMA, POLAR und JAGUAR sind ähnlich wie beim TIGER in Referenz [2]. Die Linearbewegung des Schiebers erfolgt hier durch ein Zahnstangengetriebe und der Schieber wird in der geschlossenen Position (Endposition) zusätzlich mit Hilfe von Elektromagneten nach unten auf die Dichtung der Eingabeöffnung gezogen.

Ein Nachteil bei der Lösung mit Elektromagneten ist, dass die Justage der Elektromagneten normalerweise sehr aufwendig ist. Bei Fehlern oder Unregelmäßigkeiten im magnetischen Feld, die ein sicheres Verschließen der Eingabeöffnung be- oder sogar verhindern, kann es oft recht diffizil und zeitraubend sein, die Elektromagneten neu zu justieren.

Im Stand der Technik sind weitere Verschlussvorrichtungen bekannt, die mit einem Schwenkmechanismus oder einem Klappdeckelmechanismus versehen sind.

Die derart ausgestatteten Spektrometer können außerdem mit einem Probenwechsler versehen sein, wobei die Probenkammer durch einen verfahrbaren Greifarm mit einer Probe beladen werden können. Daraufhin wird die Eingabeöffnung durch eine Verschlusskappe abgedeckt. Die Verschlusskappe ist an einer Verbindungsplatte befestigt, die durch eine Umlenkrolle geschwenkt werden kann.

Nachteilig an den Verschlussvorrichtungen aus dem genannten Stand der Technik ist, dass der Schwenk- oder Klappmechanismus in der jeweiligen Ausgestaltung durch die vorgesehen Verschwenkbarkeit oftmals viel Raum einnehmen kann, sowie in der Regel relativ komplex gestaltet ist und damit nicht zu vernachlässigende Kosten für seine Herstellung und spätere Wartung verursacht.

Insbesondere ist nachteilig, dass der Deckel, da er ja nur aufgelegt wurde, nicht vollständig parallel zum Dichtring angeordnet ist und auch leicht verrutschen kann und daher zumeist nur eine geringe Überdruck-Dichtheit gewährleistet.

Die eingangs zitierte Referenz [1] beschreibt einen -ausschließlich lateralverschiebbaren Schieber zum gasdichten Verschließen der Eingabeöffnung der Probenkammer eines transportablen Probenhalters. Messung und Probenpräparation werden in unterschiedlichen Vakuumumgebungen durchgeführt. Für die Probenpräparation wird die Probe in den Probenhalter unter vermindertem Atmosphärendruck eingeführt. Der Schieber verschließt sodann die Öffnung des Probenhalters. Dies geschieht, indem der Schieber lateral über den Probenhalter bewegt wird. Am Probenhalter sind Aussparungen angeordnet, in die der obenliegende Schieber durch sein eigenes Gewicht herabfällt. Hierdurch wird die Probenkammer des Probenhalters verschlossen und eine gewisse Anfangsdichtigkeit erzeugt. Der Probenhalter wird dann aus der Umgebung mit vermindertem Atmosphärendruck herausgeholt und unter der gewöhnlichen Außenatmosphäre zum Spektrometer transportiert. Die Kraft, die sich aus der Fläche und dem Druckunterschied von der gewöhnlichen Außenatmosphäre und der künstlich erzeugten Atmosphäre in der Probenkammer des Probenhalters ergibt, wirkt dann als Dichtkraft auf den Schieber. Der Probenhalter wird in den Messraum des Spektrometers eingebracht und danach der Messraum evakuiert. Der Schieber kann dann motorisch geöffnet werden und beispielsweise eine XRF-Messung gestartet werden.

Nachteilig ist hier ebenfalls, dass ein Verschließen der Probenkammer mit sicherer Überdruckdichtheit wiederum nur in beschränktem Maße möglich ist. Gerade bei der Messung von flüssigen Proben ist es jedoch praktisch immer notwendig, die Probenkammer unter einer Schutzgasatmosphäre zu halten.

Messungen flüssiger Proben unter Vakuum sind oft nur äußerst schwer, meistens gar nicht möglich, da -abhängig vom Lösemittel der flüssigen Probeunter Vakuum der Siedepunkt der flüssigen Probe stets erniedrigt wird und die flüssige Probe an ihrer Oberfläche in die Gasphase übergeht.

Des Weiteren können die Messungen dadurch erschwert werden, dass die Probenpräparation einerseits und die Messung andererseits in verschiedenen, voneinander räumlich separierten Umgebungen vorgenommen werden.

### Aufgabe der Erfindung

Der vorliegenden Erfindung liegt demgegenüber die Aufgabe zugrunde, bei einer Verschlussvorrichtung der eingangs beschriebenen Art zum gasdichten Verschließen der Eingabeöffnung einer Probenkammer eines Röntgen-Fluoreszenz-Spektrometers mit unaufwändigen, leicht beschaffbaren oder zur Verfügung stehenden technischen Mitteln einen über die Eingabeöffnung lateral verschiebbaren Schieber so auszugestalten, dass der Schieber auf einfache Art und Weise die Eingabeöffnung der Probe verlässlich sowohl vakuumdicht als auch überdruckdicht verschließen kann.

### Kurze Beschreibung der Erfindung

Diese Aufgabe wird durch die vorliegende Erfindung auf ebenso überraschend einfache wie wirkungsvolle Weise dadurch gelöst, dass der Schieber eine Verschlussplatte sowie einen Schlitten umfasst, welcher so ausgebildet ist, dass er auf der linearen Führung, die auf einer mit der Probenkammer fest verbundenen Grundplatte angeordnet ist, über die Eingabeöffnung der Probenkammer verschoben werden kann; dass die Verschlussplatte mit dem Schlitten über Umlenkelemente gelenkig verbunden ist, wobei die Umlenkelemente beim Anstoßen an einem starr mit der Grundplatte verbundenen Endanschlag die Lateralbewegung des Schlittens in eine Bewegung senkrecht dazu umlenken, um die Verschlussplatte auf die Eingabeöffnung zu pressen; und dass der Schieber von einem Antriebsmotor, der über ein Antriebsmittel mit dem Schlitten verbunden ist, motorisch angetrieben in einer Lateralbewegung auf der linearen Führung verschiebbar ist.

Die vorliegende Erfindung schlägt also vor, den Schieber der Verschlussvorrichtung so auszugestalten, dass eine Lateralbewegung auf den Schieber in eine Bewegung senkrecht zu dieser Lateralbewegung umgelenkt wird und somit die Eingabeöffnung der Probenkammer ("Probenkammer-öffnung") sowohl vakuumdicht als auch dicht gegenüber einem Überdruck im Inneren der Probenkammer relativ zur Außenatmosphäre verschlossen werden kann.

Hierfür umfasst der Schieber eine Verschlussplatte und einen Schlitten. Der Schlitten kann entlang der linearen Führung verschoben werden. Die lineare Führung ist auf einer Grundplatte angeordnet. Die Grundplatte ist fest mit der Probenkammer verbunden. Der Schlitten (und somit auch die Verschlussplatte) kann in einer linearen Bewegung über die Eingabeöffnung der Probenkammer verschoben werden. Die Verschlussplatte liegt dann über der Eingabeöffnung der Probenkammer (in einer Verschließposition).

Weiterhin ist die Verschlussplatte mit dem Schlitten gelenkig, über Umlenkelemente ("Verbindungshebel") verbunden.

Die Grundplatte umfasst einen starr mit ihr verbundenen Endanschlag ("Anschlagpunkt"). Der Schlitten wird lateral in die Verschließposition verschoben oder verfahren. Die Umlenkelemente stoßen dann mit dem Endanschlag zusammen. Der Schlitten wird weiter verfahren, wodurch sich die beweglichen Umlenkelemente bewegen. Diese Bewegung wird auf die Verschlussplatte übertragen. Die Bewegung der Verschlussplatte erfolgt senkrecht zur lateralen Bewegung des Schlittens. Die Umlenkelemente lenken also die laterale Bewegung des Schlittens in eine senkrechte Bewegung der Verschlussplatte um. Die Verschlussplatte wird dann gleichmäßig auf die Eingabeöffnung gedrückt bzw. gepresst. Ob die Andrückbewegung nach oben oder nach unten erfolgt, hängt unter anderem von der jeweiligen Geometrie des Röntgenanalysegeräts ab und ist für die vorliegende Erfindung nicht erheblich.

Die Kraft, die dabei auf die Eingabeöffnung wirkt, kann eingestellt werden durch Streckenlänge der Verschiebung des Schlittens und damit verursachte Bewegung der Umlenkelemente gegen den Endanschlag der Grundplatte. Wird der Schlitten vom Endanschlag wegbewegt, wird die Verschlussplatte von der Eingabeöffnung angehoben und der Druck auf die Eingabeöffnung gelöst.

Alternativ kann -anstatt die Umlenkelemente gegen den Endanschlag zu bewegen- auch die Verschlussplatte gegen einen Vorsprung der Grundplatte verfahren werden. Die Umlenkelemente lenken in diesem Fall ebenfalls die laterale Bewegung des Schlittens in eine vertikale Bewegung der Verschlussplatte auf die Eingabeöffnung um.

Der Schieber wird über einen Antriebsmotor lateral auf der linearen Führung verschoben. Der Antriebsmotor ist mit dem Schlitten des Schiebers über ein Antriebsmittel verbunden. Durch den Antriebsmotor kann eine gleichmäßige Verschiebung erfolgen und der Anpressdruck der Verschlussplatte auf die Eingabeöffnung der Probenkammer bis zu einem gewünschten Grad eingestellt werden.

Der Verschlussvorrichtung ist so ausgebildet, dass sowohl für die laterale Bewegung als auch für die senkrecht dazu ausgeübte Bewegung der Verschlussplatte des Schiebers lediglich ein und derselbe Antriebsmotor benötigt wird. Die Bewegung, mit der die Eingabeöffnung der Probenkammer durch die Verschlussplatte bedeckt und geöffnet wird, sowie die Bewegung, mit der die Verschlussplatte auf die Eingabeöffnung der Probenkammer gedrückt und von der Eingabeöffnung der Probenkammer abgehoben wird, wird also lediglich durch ein einziges aktives Element, nämlich den Antriebsmotor, ausgeführt. Die Größe des Aufbaus, insbesondere die Bauhöhe, kann dadurch geringgehalten werden. Außerdem können weitere Antriebsmotoren eingespart und dadurch die Kosten reduziert werden.

### Bevorzugte Ausführungsformen und Weiterbildungen der Erfindung

Bei einer bevorzugten Klasse von Ausführungsformen der erfindungsgemäßen Verschlussvorrichtung ist vorgesehen, dass zumindest ein Teil der Umlenkelemente als Drehhebel ausgebildet ist, insbesondere als, vorzugsweise gekrümmter, starrer Hebel, der um eine starre Welle drehbar am Schlitten gelagert ist.

Durch die Drehhebel kann die laterale Bewegung des Schlittens besonders gut in eine dazu vertikale Bewegung umgelenkt werden. Außerdem kann der Drehhebel die auf ihn wirkende Kraft durch die Lateralbewegung des Schlittens besonders genau und definiert auf die Verschlussplatte übertragen.

Bei vorteilhaften Weiterbildungen dieser Klasse von Ausführungsformen ist weiterhin vorgesehen, dass der Drehhebel einen Abschnitt mit einem Langloch aufweist, in welches ein mit der Verschlussplatte starr verbundener Pin eingreift.

Das Langloch dient als Führungselement für den Pin. Durch das Langloch und den in das Langloch eingreifenden Pin können der Drehhebel und die Verschlussplatte untereinander verschoben und entsprechend justiert werden, sowie Toleranzen ausgeglichen werden.

Alternativ oder ergänzt kann bei anderen Weiterbildungen die Verschlussplatte rechteckig geformt sein und die Umlenkelemente mindestens drei Drehhebel umfassen.

Eine rechteckig geformte Verschlussplatte ist günstig in der Herstellung und kann besonders einfach in einer linearen Bewegung verfahren werden. Eine solche rechteckig geformte Verschlussplatte kann außerdem besonders gleichmäßig auf die Eingabeöffnung der Probenkammer drücken.

Die mindestens drei Drehhebel ermöglichen, dass die vertikale Bewegung, mit der die Verschlussplatte auf die Eingabeöffnung gedrückt wird, parallel verläuft und sich ein Anpressdruck der Verschlussplatte gleichmäßig auf die Eingabeöffnung verteilt. Man beachte, dass die mindestens drei Drehhebel so an der Verschlussplatte und dem Schlitten angebracht sind, dass der Anpressdruck der Verschlussplatte auf die Eingabeöffnung um deren Umfang herum möglichst gleichmäßig ist. Drei Drehhebel sind somit insbesondere bei kreisrunden Verschlussplatten vorteilhaft; bei rechteckig geformten Verschlussplatten sind vier Drehhebel, die jeweils an den Ecken der der Verschlussplatte angeordnet sind, für einen gleichmäßigen Anpressdruck vorteilhafter.

Ebenfalls bevorzugt sind Ausführungsformen der erfindungsgemäßen Verschlussvorrichtung, bei denen die lineare Führung eine Führungsschiene umfasst, die insbesondere in oder auf der Grundplatte angeordnet ist.

Durch die Führungsschiene kann eine besonders präzise, gleichmäßige und sichere Bewegung des Schlittens erreicht werden.

Vorteilhaft sind auch Ausführungsformen, bei denen eine vertikale Führungseinrichtung zur Führung der Bewegung der Verschlussplatte in einer Richtung senkrecht zu ihrer Lateralbewegung vorhanden ist.

Auf diese Weise kann die senkrechte Bewegung der Verschlussplatte sicher geführt und ein etwaiges Verrutschen bei der senkrechten Bewegung verhindert werden. Weiterhin kann durch die vertikale Führungseinrichtung die Verschlussplatte sehr präzise auf die Eingabeöffnung abgesenkt und von der Eingabeöffnung angehoben werden.

In weiteren bevorzugten Ausführungsformen sind zwischen der Verschlussplatte und dem Schlitten Federelemente angeordnet, mit denen die Verschlussplatte und der Schlitten auf einem bestimmten Abstand auseinandergehalten werden.

Hierdurch wird sicher verhindert, dass die Verschlussplatte schon in der lateralen Bewegung des Schlittens mit der Eingabeöffnung oder weiteren Bauteilen, die auf der Grundplatte angebracht sind, zusammenstößt oder in Kontakt kommt.

Des Weiteren sind Ausführungsformen der Erfindung bevorzugt, die sich dadurch auskennzeichnen, dass an der Verschlussplatte Anschlagbolzen angebracht sind, mit welchen die Verschlussplatte gegen einen Anschlag an oder in der Grundplatte stoßen, oder vice versa.

Die Anschlagbolzen können problemlos an der Verschlussplatte angebracht werden. Bei einer lateralen Bewegung der Verschlussplatte können die Anschlagbolzen besonders präzise gegen den Anschlag stoßen. Die laterale Bewegung wird nach dem Anstoßen dann über die Umlenkelemente in eine hierzu senkrechte Bewegung der Verschlussplatte umgelenkt.

Ebenfalls vorteilhaft sind Ausführungsformen der erfindungsgemäßen Verschlussvorrichtung, bei denen der Antriebsmotor als Elektromotor, vorzugsweise als Schrittmotor ausgeführt ist.

Dies lässt sich in der Praxis besonders einfach umsetzen. Der Schieber mit der Verschlussplatte lässt sich auf diese Weise präzise, insbesondere räumlich sehr zielgenau bewegen.

Besonders bevorzugt ist eine Klasse von Ausführungsformen der erfindungsgemäßen Verschlussvorrichtung, die sich dadurch auszeichnen, dass das Antriebsmittel, über welches der Antriebsmotor mit dem Schlitten verbunden ist, einen Zahnriementrieb und/oder eine Antriebskette und/oder eine Schubstange und/oder eine Gewindespindel und/oder einen Hydraulik-Schieber und/oder einen Pneumatik-Zylinder umfasst.

Bei vorteilhaften Weiterbildungen dieser Klasse von Ausführungsformen laufen der Zahnriementrieb beziehungsweise die Antriebskette über eine Antriebs-Umlenkrolle sowie über eine Riemenscheibe.

Durch die Antriebs-Umlenkrolle lässt sich die Antriebsbewegung des Antriebsmotors auf den Zahnriementrieb beziehungsweise die Antriebskette und der Antriebsmotor übertragen. Hierdurch kann der Antriebsmotor flexibel positioniert werden und der Platzbedarf der Verschlussvorrichtung wird verringert. Über die Riemenscheibe und die Antriebs-Umlenkrolle wird der Zahnriementrieb beziehungsweise die Antriebskette gespannt.

Nutzbringend sind des Weiteren Varianten dieser Weiterbildungen, bei denen die Antriebs-Umlenkrolle und/oder die Riemenscheibe über ein Federelement gegenüber der Grundplatte, insbesondere gegenüber der Führung, in Richtung des Schlittens federnd gelagert und vorzugsweise mit einer definierten Kraft gespannt sind.

Durch die Federspannung können der Zahnriementrieb beziehungsweise die Antriebskette mit einer definierten Kraft automatisch gespannt werden. Die Vorspannung der Federn bleibt gleich, auch wenn sich der der Zahnriementrieb beziehungsweise die Antriebskette verziehen. Weiterhin kann hierdurch der Verschleiß durch eine Längung des Zahnriementriebs beziehungsweise der Antriebskette relativ einfach kompensiert werden.

Ebenfalls bevorzugt sind Ausführungsformen der erfindungsgemäßen Verschlussvorrichtung, bei denen die Verschlussplatte und/oder die Probenkammer im Bereich um die Eingabeöffnung Dichtungselemente aufweisen, die insbesondere als Dichtringe und gegebenenfalls als dazu passende Nuten oder Dichtflächen als Gegenstücke ausgestaltet sind.

Hierdurch kann die Probenkammer besonders effektiv sowohl überdruckdicht als auch vakuumdicht abgeschlossen werden.

In den Rahmen der vorliegenden Erfindung fällt auch ein Röntgenanalysegerät, insbesondere ein Röntgen-Fluoreszenz-Spektrometer, enthaltend eine erfindungsgemäße Verschlussvorrichtung der oben beschriebenen Art zum gasdichten Verschließen der Eingabeöffnung einer Probenkammer.

Auf diese Weise können Messungen mit dem Röntgenanalysegerät durchgeführt werden, bei denen die Probenkammer sowohl unter Vakuum gehalten werden (beispielsweise bei festen Proben) als auch unter Druck stehen soll (beispielsweise zur Messung von Flüssigkeiten). Der Aufbau der erfindungsgemäßen Verschlussvorrichtung weist eine besonders geringe Bauhöhe auf und ist mithin besonders platzsparend einsetzbar. Hierdurch kann wiederum der gesamte Platzbedarf des mit der Erfindung ausgerüsteten Röntgenanalysegeräts verringert werden.

Ebenfalls in den Rahmen der vorliegenden Erfindung fällt ein Verfahren zum Betrieb einer erfindungsgemäßen Verschlussvorrichtung, wie sie oben beschrieben ist, oder eines Röntgenanalysegeräts wie ebenfalls oben beschrieben, welches sich dadurch auszeichnet, dass die Bewegungen der Verschlussplatte in einer bestimmten, vorgegebenen, nicht veränderbaren Reihenfolge ausgeführt werden.

Bei einer Hin-Bewegung verfährt der Schlitten mit der Verschlussplatte lateral, bis die Verschlussplatte über der Eingabeöffnung liegt und die Umlenkelemente an dem mit der Grundplatte verbundenen Anschlag anstoßen. Durch die Umlenkelemente wird die laterale Bewegung, die auf den Schlitten wirkt, in die hierzu senkrechte Bewegung, die auf die Verschlussplatte wirkt, übertragen. Bei einer Rück-Bewegung laufen die zuvor beschriebenen Schritte in umgekehrter Reihenfolge ab. Die Hin- und Rückbewegung, sowie die laterale Bewegung und die hierzu senkrecht stehende Bewegung können durch lediglich einen einzigen Antriebsmotor umgesetzt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung im Detail dargestellt und wird anhand von Ausführungsbeispielen näher erläutert.

Es zeigen:

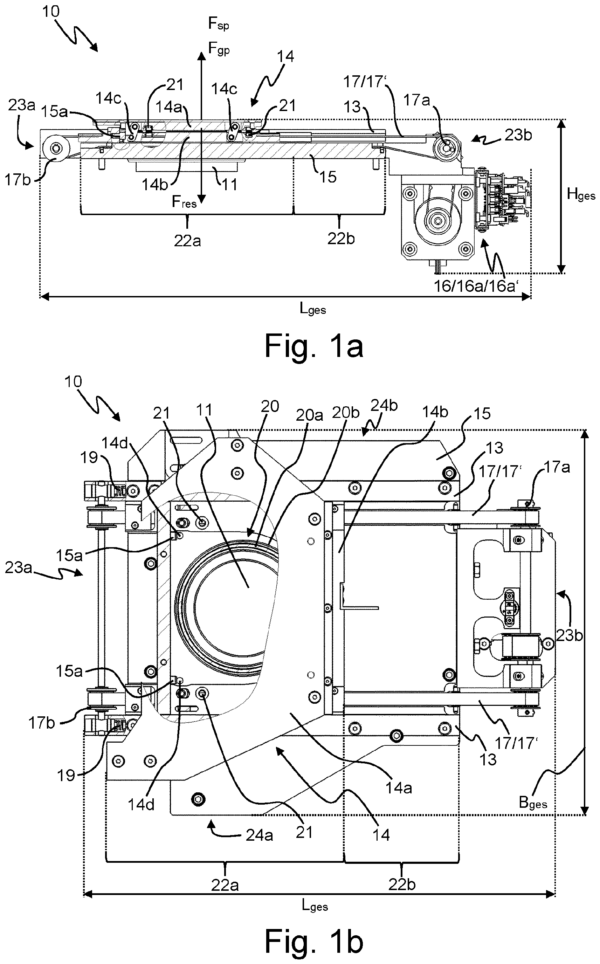

- Fig. 1a: eine Vertikalschnittansicht einer beispielhaften ersten Ausführungsform der erfindungsgemäßen Verschlussvorrichtung von der Seite;
- Fig. 1: b eine Draufsicht auf die beispielhafte erste Ausführungsform der erfindungsgemäßen Verschlussvorrichtung aus Fig. 1a von oben;
- Fig. 2a: eine schematische Seitenansicht auf den Schieber und die Grundplatte einer beispielhaften weiteren Ausführungsform der erfindungsgemäßen Verschlussvorrichtung mit einem Umlenkelement, welches als Drehhebel ausgebildet ist, mit durch Pfeile angezeigter jeweiliger Bewegungsrichtung der zusammenwirkenden Bauteile;
- Fig. 2b: eine schematische Seitenansicht auf den Schieber und die Grundplatte einer beispielhaften weiteren Ausführungsform der erfindungsgemäßen Verschlussvorrichtung mit einem Umlenkelement, welches als Zahnrad mit exzentrisch angeordneter Achse ausgeführt ist, mit durch Pfeile angezeigter jeweiliger Bewegungsrichtung der zusammenwirkenden Bauteile und;
- Fig. 3: einen schematischen Messaufbau zur Durchführung von Röntgen-Fluoreszenz-Messungen mit einem Röntgenanalysegerät unter Verwendung der erfindungsgemäßen Verschlussvorrichtung.

### Aufbau der Verschlussvorrichtung

**Fig**. 1a und **Fig. 1b** zeigen eine beispielhafte erste Ausführungsform einer erfindungsgemäßen **Verschlussvorrichtung 10** in unterschiedlichen Ansichten. Die Verschlussvorrichtung 10 umfasst eine **Eingabeöffnung 11,** einen **Schieber 14** mit einer **Verschlussplatte 14a** zum Verschließen der Eingabeöffnung 11, eine **Grundplatte 15** mit hier zwei **Endanschlägen 15a** und einen **Antriebsmotor 16.** Man beachte, dass in Fig. 1b ein Teil der Verschlussplatte 14a nicht gezeigt wird, um somit einen besseren Blick auf die unter der Verschlussplatte 14a liegenden Bauteile zu ermöglichen.

Die Eingabeöffnung 11 ist in der hier gezeigten Ausführungsform radial mit einem Durchmesser von 90 mm ausgebildet. Die Eingabeöffnung 11 ist hier in die Grundplatte 15 eingelassen. In den hier gezeigten Figuren ist die Eingabeöffnung 11 zentral in einem **ersten Bereich 22a** der Grundplatte 15 angeordnet.

Im Bereich um die Eingabeöffnung 11 herum angeordnet befinden sich **Dichtungselemente 20,** die hier als ein **Dichtring 20a** mit einer **Nut 20b** ausgestaltet sind, in die der Dichtring 20a eingelassen werden kann. Die Nut 20b dient als Gegenstück zum Dichtring 20a und die Eingabeöffnung 11 kann mit Hilfe des Dichtrings 20a und der Nut 20b auf verlässliche Weise druckdicht sowie vakuumdicht verschlossen werden.

In einer weiteren, hier nicht näher dargestellten Ausführungsform ist es auch möglich, dass die Dichtungselemente 20 auf der Verschlussplatte 14a angebracht sind. Die Dichtungselemente 20 sind in dem Bereich der Verschlussplatte 14a angebracht, der direkt über der Eingabeöffnung 11 beim Verschließen der Eingabeöffnung 11 zum Ruhen kommt. Die Verschlussplatte 14a kann dann die Eingabeöffnung 11 druckdicht sowie vakuumdicht verschließen.

Der Schieber 14 umfasst in der hier gezeigten Ausführungsform neben der Verschlussplatte 14a einen **Schlitten 14b,** vier **Umlenkelemente 14c** und zwei **Anschlagbolzen 14d.** Die Verschlussplatte 14a ist hier als flache, unregelmäßig ausgeformte Platte mit einer Dicke von 9 mm ausgebildet und befindet sich hier im ersten Bereich 22a der Grundplatte 15. Die Verschlussplatte 14a ist über die vier Umlenkelemente 14c mit dem Schlitten 14b verbunden. Dabei sind zwei Umlenkelemente 14c auf einer **Vorderseite 24a** und zwei Umlenkelemente auf einer **Rückseite 24b** der Verschlussvorrichtung 10 angeordnet. Die Anschlagbolzen 14d sind an der Verschlussplatte 14a angebracht und stoßen in Fig. 1b an die zwei Endanschläge 15a der Grundplatte 15 an.

Weiterhin sind in der hier gezeigten Ausführungsform zwischen der Verschlussplatte 14a und dem Schlitten 14b vier **Federelemente 21** (= "Federabstandselemente") angeordnet, um die Verschlussplatte 14a und den Schlitten 14b voneinander zu beabstanden. Die Federelemente 21 sind gleichmäßig nahe der Ränder der Verschlussplatte 14a verteilt, damit sich die Federkraft der Federelemente 21 gleichmäßig über die Verschlussplatte 14a verteilen kann und der Abstand zwischen der Verschlussplatte 14a und dem Schlitten 14b besonders einheitlich ist. Durch die Federelemente 21 wird zwischen der Verschlussplatte 14a und dem Schlitten 14b ein Abstand von hier 2 mm eingerichtet. Hierdurch kann die Verschlussplatte 14a ausreichend von weiteren Bauteilen der Verschlussvorrichtung 10 beabstandet werden und eine kollisionsfreie Bewegung der Verschlussplatte 14a durch den Schlitten 14b erreicht werden.

Die Grundplatte 15 ist in der hier gezeigten Ausführungsform rechteckig ausgebildet. Die Grundplatte 15 kann in den ersten Bereich 22a und in einen **zweiten Bereich 22b** aufgeteilt werden. Auf der Grundplatte 15 sind hier zwei lineare **Führungen 13** angeordnet. Der Schlitten 14b ist so ausgebildet, dass er entlang der linearen Führungen 13 bewegt werden kann. Die linearen Führungen 13 umfassen in der hier gezeigten Ausführungsform jeweils eine Führungsschiene (in der Darstellung der Fig. 1a und 1b verdeckt), durch welche der Schlitten 14b präzise bewegt werden kann.

Der Antriebsmotor 16 ist in der hier gezeigten Ausführungsform als ein **Elektromotor 16a,** genauer als ein **Schrittmotor 16a',** ausgeführt. Der Antriebsmotor 16 ist hier an einem **zweiten Ende 23b** der Grundplatte 15 angeordnet. Die Kraft des Antriebsmotors 16 wird auf den Schlitten 14b über hier zwei **Antriebsmittel 17** übertragen. Die Antriebsmittel 17 umfassen hier **Zahnriementriebe 17'.** Alternativ ist auch die Verwendung anderer Antriebsmittel 17 wie beispielsweise Antriebsketten und/oder Schubstangen möglich.

In der gezeigten Ausführungsform laufen die Zahnriementriebe 17' über eine **Antriebsumlenkrolle 17a** und eine **Riemenscheibe 17b.** Die Antriebsumlenkrolle 17a liegt in unmittelbarer Nähe zum Antriebsmotor 16 am zweiten Ende 23b der Grundplatte 15. Der Antriebsmotor 16 kann eine erzeugte Antriebskraft auf die Antriebsumlenkrolle 17a übertragen. Die Riemenscheibe 17b ist gegenüber der Antriebsumlenkrolle 17a an einem **ersten Ende 23a** der Grundplatte 15 angeordnet. Die Riemenscheibe 17b ist hier über zwei **Federelemente 19** (= "Federspannelemente") gegenüber der Führung 13 auf der Grundplatte 15 in Richtung des Schiebers 14b federnd gelagert. Durch die Federelemente 19 wird der Zahnriementrieb 17' mit einer definierten Kraft automatisch gespannt. Die Vorspannung der Federelemente 19 bleibt gleich, selbst wenn sich der Zahnriementrieb 17' verzieht. Der Verschleiß durch eine Längung des Zahnriementriebs 17` kann außerdem recht leicht kompensiert werden.

Die Verschlussvorrichtung 10 hat in der hier gezeigten Ausführungsform eine **Gesamthöhe H_{ges}** von 33 mm, eine **Gesamtlänge L_{ges}** von 410 mm und eine **Gesamtbreite B_{ges}** von 303 mm. Die Länge und Breite wird im Wesentlichen durch die Größe der Probenkammer bestimmt. Die Grundplatte dient gleichzeitig als Deckel für die Probenkammer. Der Vorteil liegt hier vor allem in der geringen Bauhöhe. Die Verschlussvorrichtung 10 nimmt also wenig Raum ein und ist daher besonders platzsparend.

### Funktionsweise der Verschlussvorrichtung

In den folgenden Abschnitten wird beispielhaft die Funktionsweise der Verschlussvorrichtung 10 erläutert:
Zu Beginn befindet sich der Schieber 14 in einer Öffnungsposition. In dieser Öffnungsposition ist der Schlitten 14b mit der Verschlussplatte 14a teilweise im ersten Bereich 22a angeordnet, komplett im zweiten Bereich 22b angeordnet und an das zweite Ende 23b der Grundplatte 15 verfahren (nicht näher dargestellt).

Der Antriebsmotor 16 wird gestartet und überträgt seine Antriebskraft auf die Antriebsumlenkrolle 17a. Die Antriebsumlenkrolle 17a bewegt die über sie laufenden Antriebsmittel 17. Die Antriebsmittel 17 sind mit dem Schlitten 14b verbunden. Der Schlitten 14b mit der Verschlussplatte 14a wird über die Antriebsmittel 17 entlang der linearen Führung 13 lateral bewegt. Die laterale Bewegung erfolgt dabei so lange, bis der Schlitten 14b am ersten Ende 23a der Grundplatte 15 angekommen ist und die Anschlagbolzen 14d, die mit der Verschlussplatte 14a verbunden sind, an die Anschläge 15a anschlagen. Die Verschlussplatte 14a befindet sich dann im ersten Bereich 22a der Grundplatte 15 direkt über der Eingabeöffnung 11 in einer Verschlussposition.

Um die Verschlussplatte 14a auf die Eingabeöffnung 11 zu drücken, wird der Schlitten 14b weiter auf das erste Ende 23a der Grundplatte 15 verfahren. Da die Verschlussplatte 14a nicht mehr in Richtung auf das erste Ende 23a lateral weiterbewegt werden kann, wird die Bewegung des Schlittens 14b über die vier Umlenkelemente 14c in eine Bewegung senkrecht zur Lateralbewegung umgelenkt. Hierdurch wird die Verschlussplatte 14a auf die Eingabeöffnung 11 zubewegt und die Eingabeöffnung 11 kann damit gasdicht verschlossen werden.

Um die Eingabeöffnung 11 gasdicht verschließen zu können muss eine **Verschlusskraft F_{cl}**, die durch den Schieber 14 auf die Eingabeöffnung 11 ausgeübt wird, größer sein, als die Summe der **Federkräfte Fₛₚ** der vier Federelemente 21 und der **Kraft F_{gp}**, die durch den Gasdruck im inneren der Probenkammer auf die Eingabeöffnung 11 ausgeübt wird, das heißt F_{cl} > Fₛₚ + F_{gp}. Eine **Widerstandskraft F_{Res}**, die auf die Eingabeöffnung 11 drückt, kann dann bestimmt werden mit Fᵣₑₛ = F_{cl} - Fₛₚ - F_{gp}.

Um die Verschlussplatte 14a von der Eingabeöffnung 11 wieder abzuheben, wird der Antriebsmotor 16 so umgestellt, dass die Antriebsmittel 17 nun in die entgegensetzte Richtung verfahren werden. Der Schlitten 14b wird also auf das zweite Ende 23b der Grundplatte 15 verfahren. Die Verschlussplatte 14a wird erst senkrecht zur Bewegung des Schlittens 14b von der Eingabeöffnung 11 abgehoben. Danach wird die Verschlussplatte 14a von der Verschlussposition über den Schlitten 14b zurück in die Öffnungsposition bewegt. Die Eingabeöffnung 11 liegt dann frei vor.

### Weitere erfindungsgemäße Ausführungsformen

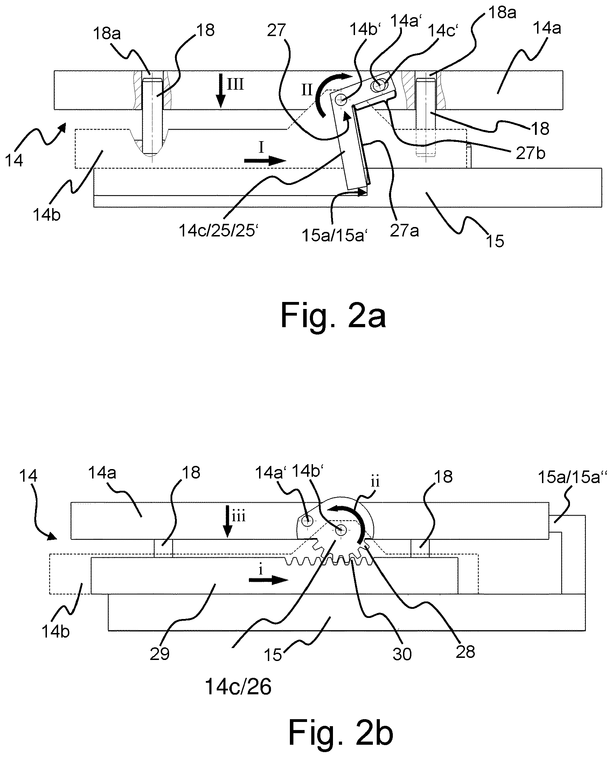

**Fig. 2a** zeigt eine schematische Seitenansicht auf den Schieber 14 und die Grundplatte 15 mit dem Anschlag 15a einer beispielhaften weiteren Ausführungsform einer erfindungsgemäßen Verschlussvorrichtung 10. Der Übersichtlichkeit halber ist der Antriebsmotor 16 in dieser Figur nicht eigens dargestellt. Es sei jedoch darauf hingewiesen, dass der hier dargestellte Schieber 14 ebenfalls durch einen Antriebsmotor 16 bewegt wird.

Der Schieber 14 umfasst in der hier gezeigten Ausführungsform die rechteckig geformte Verschlussplatte 14a, den Schlitten 14b und das Umlenkelement 14c. Das Umlenkelement 14c ist hier als ein **Drehhebel 25,** genauer als ein drehbar gelagerter **gekrümmter, starrer Hebel 25'** ausgebildet. Ein **langer Arm 27a** des Drehhebels 25 zeigt in Richtung der Grundplatte 15 und ein **kurzer Arm 27b** des Drehhebels 25 zeigt in Richtung der Verschlussplatte 14a. Der Drehhebel 25 ist in einem **Verbindungsbereich 27,** in dem der lange Arm 27a und der kurze Arm 27b des Drehhebels 25 zusammentreffen, am Schlitten 14b über eine in den Schlitten 14b eingelassene **starre Welle 14b'** drehbar gelagert.

Am Ende des kurzen Arms 27b des Drehhebels 25 weist der kurze Arm 27b ein **Langloch 14c'** auf. In dieses Langloch 14c' greift ein **Pin 14a',** der mit der Verschlussplatte 14a starr verbunden ist, ein. Auf diese Weise werden die Verschlussplatte 14a und der Drehhebel 25 miteinander verbunden. Weiterhin sind in der hier gezeigten Ausführungsform zwei **vertikale Führungseinrichtungen 18** gezeigt, die jeweils teilweise in hier zwei zylinderförmige, in der Verschlussplatte 14a eingelassene **Führungsaussparungen 18a** hineinragen.

Im Folgenden wird noch einmal kurz die Funktionsweise der hier gezeigten Ausführungsform beschrieben:
Der Schlitten 14b wird in einer lateralen Bewegung (siehe Bewegungspfeil I) in Richtung des Anschlags 15a bewegt, der in der hier gezeigten Ausführungsform als ein **Anschlagvorsprung 15a'** ausgebildet ist. Sobald der Drehhebel 25 an den Anschlag 15a anstößt, wird die weitere laterale Bewegung des Schlittens 14b über den Drehhebel 25 in eine Bewegung senkrecht zur lateralen Bewegung umgelenkt (siehe Bewegungspfeil II). Hierdurch wird die umgelenkte, senkrechte Bewegung auf die Verschlussplatte 14a übertragen und die Verschlussplatte 14a nach unten gezogen (siehe Bewegungspfeil III) und auf die Eingabeöffnung (nicht näher dargestellt) gepresst.

Damit die Verschlussplatte 14a bei der senkrechten Bewegung nicht verrutscht, wird sie mit ihren Führungsaussparungen 18a entlang der vertikalen Führungseinrichtungen 18 geführt. Um die Bewegung umzukehren, wird der Schlitten 14b lateral in die entgegengesetzte Richtung des Anschlags 15a bewegt.

**Fig. 2b** zeigt eine schematische Seitenansicht auf den Schieber 14 und die Grundplatte 15 mit dem Anschlag 15a einer beispielhaften weiteren Ausführungsform einer erfindungsgemäßen Verschlussvorrichtung. Der Einfachheit halber ist auch in dieser Figur der Antriebsmotor 16 nicht näher dargestellt. Es sei jedoch darauf hingewiesen, dass der hier dargestellte Schieber 14 ebenfalls durch einen Antriebsmotor 16 bewegt wird.

Der Schieber 14 umfasst in der hier gezeigten Ausführungsform die rechteckig geformte Verschlussplatte 14a, den Schlitten 14b und das Umlenkelement 14c. Das Umlenkelement 14c ist hier als ein **Zahnrad 26** mit sechs **Zahnradzähnen 28** ausgebildet. Stattdessen kann hier auch ein komplett verzahntes Zahnrad verwendet werden. Die zulässige Bauhöhe ist das Kriterium was die Bauform festlegt. Über die Grundplatte 15 wird eine **Zahnstange 29** geführt, die hier beweglich in Richtung i und gefedert mit dem Schlitten 14b verbunden ist. An dieser Zahnstange 29 wird die Motorkraft eingeleitet und der ganze Schieber 14 bewegt. Die Führungseinrichtung 18 ist fest mit den Schlitten 14b verbunden. In die Zahnstange 29 sind sieben **Zahnstangenzähne 30** eingelassen. Hier kann auch eine komplett verzahnte Zahnstange verwendet werden. In der Abbildung soll das eine schematische Andeutung der Zähne sein. Das Zahnrad 26 und die Zahnstange 29 greifen über ihre Zähne 28, 30 ineinander ein. Das Zahnrad 26 ist am Schlitten 14b über die in den Schlitten 14b eingelassene starre Welle 14b' drehbar gelagert. Über den Pin 14a`, der mit der Verschlussplatte 14a starr verbunden ist, wird die Verschlussplatte 14a mit dem Zahnrad 26 verbunden. Der Pin 14a' ist hier exzentrisch zur Zahnradachse angeordnet. Weiterhin sind in der hier gezeigten Ausführungsform die zwei vertikalen Führungseinrichtungen 18 gezeigt.

Im Folgenden wird noch einmal kurz die Funktionsweise der hier gezeigten Ausführungsform beschrieben:
Der Schlitten 14b mit der Zahnstange 29 wird in einer lateralen Bewegung (siehe Bewegungspfeil i) in Richtung des Anschlags 15a bewegt, der in der hier gezeigten Ausführungsform als ein auf der Grundplatte 15 befestigtes **Anschlagelement 15a"** ausgebildet ist. Sobald die Verschlussplatte 14a an den Anschlag 15a anstößt, wird die weitere laterale Bewegung des Schlittens 14b über das Zahnrad 26, welches über die Zahnstangenzähne 30 der Zahnstange 29 bewegt wird, in eine Bewegung senkrecht zur lateralen Bewegung umgelenkt (siehe Bewegungspfeil ii). Hierdurch wird die umgelenkte, senkrechte Bewegung auf die Verschlussplatte 14a übertragen und die Verschlussplatte 14a nach unten gezogen (siehe Bewegungspfeil iii).

Damit die Verschlussplatte 14a nicht verrutscht, wird die Verschlussplatte 14a entlang der vertikalen Führungseinrichtungen 18 geführt. Um die Bewegung umzukehren, wird der Schlitten 14b lateral in die entgegengesetzte Richtung des Anschlags 15a bewegt.

### Schematischer Messaufbau

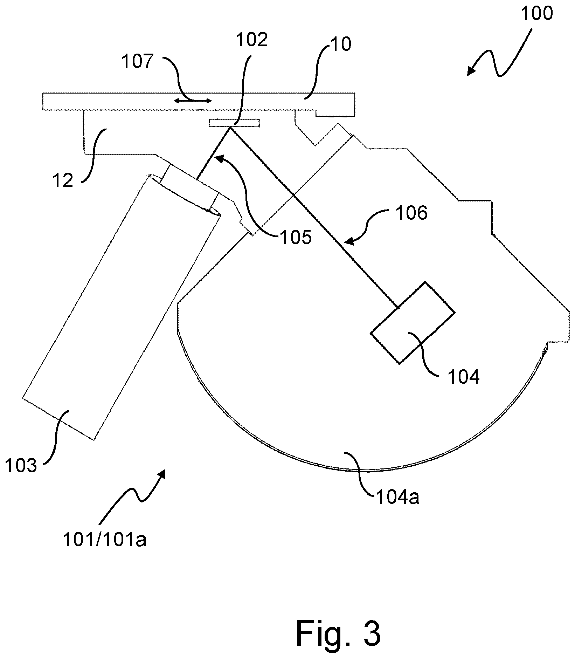

In **Fig.** 3 ist ein schematischer **Messaufbau 100** gezeigt, bei dem die erfindungsgemäße Verschlussvorrichtung 10 Anwendung findet.

Der Messaufbau 100 beinhaltet ein **Röntgenanalysegerät 101,** welches hier als **Röntgen-Fluoreszenz-Spektrometer 101a** ausgeführt ist. Das Röntgen-Fluoreszenz-Spektrometer 101a umfasst eine **Probenkammer 12** mit einer in die Probenkammer 12 eingebrachten **Messprobe 102** (beispielsweise eine flüssige Messprobe), die Verschlussvorrichtung 10, eine **Röntgenquelle 103,** einen **Detektor 104** und einen **Detektorraum 104a,** in dem der Detektor 104 angeordnet ist.

Die Verschlussvorrichtung 10 verschließt in der hier gezeigten Darstellung die Probenkammer 12 gasdicht (wie anhand der Figuren 1a und 1b beschrieben; siehe außerdem den **Bewegungspfeil 107** in Fig. 3). In die Probenkammer 12 ist ein Schutzgas, in der Regel Argon, eingeleitet und es herrscht ein leichter Überdruck in der Probenkammer 12. Der Überdruck drückt gegen Eingabeöffnung (hier nicht näher dargestellt, siehe aber Fig. 1b) der Probenkammer 12. Die Verschlussplatte (nicht näher dargestellt, aber siehe beispielsweise Fig. 2a) wird auf die Eingabeöffnung der Probenkammer 12 gedrückt. Über die Röntgenquelle 103 wird die Messprobe 102 dann mit **hochenergetischer Strahlung 105** angeregt und die von der Messprobe 102 **emittierte Röntgenstrahlung 106** am Detektor aufgefangen und ausgewertet. Nach der Messung kann die Verschlussvorrichtung 10 auf einfache Weise geöffnet werden und die Messprobe 102 über die Eingabeöffnung aus der Probenkammer 12 herausgeholt werden. Anschließend kann eine weitere Messprobe 102 in die Probenkammer 12 eingesetzt werden und die Eingabeöffnung durch die Verschlussvorrichtung 10 für die nächste Messung überdruckdicht (oder wahlweise auch vakuumdicht) verschlossen werden.

### Bezugszeichenliste:

- 10: Verschlussvorrichtung
- 11: Eingabeöffnung
- 12: Probenkammer
- 13: lineare Führung
- 14: Schieber
- 14a: Verschlussplatte
- 14a': Pin
- 14b: Schlitten
- 14b': Starre Welle
- 14c: Umlenkelement
- 14c': Langloch
- 14d: Anschlagbolzen
- 15: Grundplatte
- 15a: Endanschlag
- 15a`: Anschlagvorsprung
- 15a": Anschlagelement
- 16: Antriebsmotor
- 16a: Elektromotor
- 16a': Schrittmotor
- 17: Antriebsmittel
- 17`: Zahnriementrieb
- 17a: Antriebs-Umlenkrolle
- 17b: Riemenscheibe
- 18: vertikale Führungseinrichtung
- 18a: Führungsaussparung
- 19: Federelement
- 20: Dichtungselement
- 20a: Dichtring
- 20b: Nut
- 21: Federelement
- 22a: erster Bereich (der Grundplatte)
- 22b: zweiter Bereich (der Grundplatte)
- 23a: erstes Ende (der Grundplatte)
- 23b: zweites Ende (der Grundplatte)
- 24a: Vorderseite (der Verschlussvorrichtung)
- 24b: Rückseite (der Verschlussvorrichtung)
- 25: Drehhebel
- 25': gekrümmter, starrer (Dreh-)Hebel
- 26: Zahnrad
- 27a: langer Arm des Drehhebels
- 27b: kurzer Arm des Drehhebels
- 28: Zahnradzähne
- 29: Zahnstange
- 30: Zahnstangenzähne
- 100: Messaufbau
- 101: Röntgenanalysegerät
- 101a: Röntgen-Fluoreszenz-Spektrometer
- 102: Messprobe
- 103: Röntgenquelle
- 104: Detektor
- 104a: Detektorraum
- 105: hochenergetische Strahlung
- 106: emittierte Röntgenstrahlung
- 107: Bewegungspfeil
- B_{ges}: Gesamtbreite der Verschlussvorrichtung
- F_{cl}: Verschlusskraft
- F_{gp}: Kraft durch den Gasdruck
- Fᵣₑₛ: Widerstandskraft (die auf die Eingabeöffnung wirkt)
- Fₛₚ: Federkraft
- H_{ges}: Gesamthöhe der Verschlussvorrichtung (ohne Antriebsmotor)
- L_{ges}: Gesamtlänge der Verschlussvorrichtung

### Referenzliste

Für die Beurteilung der Patentfähigkeit in Betracht gezogene Publikationen:
[1] JP 6077812 B2
[2] https://www.bruker.com/de/products-and-solutions/elementalanalyzers/xrf-spectrometers/s8-tiger.html
[3] https://www.bruker.com/en/products-and-solutions/elementalanalyzers/xrf-spectrometers/s2-puma-series2.html
[4] https://www.bruker.com/en/products-and-solutions/elementalanalyzers/xrf-spectrometers/s2-polar.html
[5] https://www.bruker.com/en/products-and-solutions/elementalanalyzers/xrf-spectrometers/s6-jaguar.html

## Patentansprüche

1. Verschlussvorrichtung (10) zum gasdichten Verschließen der Eingabeöffnung (11) einer Probenkammer (12) eines Röntgenanalysegeräts (101), insbesondere eines Röntgen-Fluoreszenz-Spektrometers (101a), mittels eines auf einer linearen Führung (13) über die Eingabeöffnung (11) lateral verschiebbaren Schiebers (14),
**dadurch gekennzeichnet,**
**dass** der Schieber (14) eine Verschlussplatte (14a) sowie einen Schlitten (14b) umfasst, welcher so ausgebildet ist, dass er auf der linearen Führung (13), die auf einer mit der Probenkammer (12) fest verbundenen Grundplatte (15) angeordnet ist, über die Eingabeöffnung (11) der Probenkammer (12) verschoben werden kann;
**dass** die Verschlussplatte (14a) mit dem Schlitten (14b) über Umlenkelemente (14c) gelenkig verbunden ist, wobei die Umlenkelemente (14c) beim Anstoßen an einem starr mit der Grundplatte (15) verbundenen Endanschlag (15a) die Lateralbewegung des Schlittens (14b) in eine Bewegung senkrecht dazu umlenken, um die Verschlussplatte (14a) auf die Eingabeöffnung (11) zu pressen;
und **dass** der Schieber (14) von einem Antriebsmotor (16), der über ein Antriebsmittel (17) mit dem Schlitten (14b) verbunden ist, motorisch angetrieben in einer Lateralbewegung auf der linearen Führung (13) verschiebbar ist.

2. Verschlussvorrichtung (10) nach Anspruch 1, **dadurch gekennzeichnet, dass** zumindest ein Teil der Umlenkelemente (14c) als Drehhebel (25) ausgebildet ist, insbesondere als, vorzugsweise gekrümmter, starrer Hebel (25`), der um eine starre Welle (14b`) drehbar am Schlitten (14b) gelagert ist.

3. Verschlussvorrichtung (10) nach Anspruch 2, **dadurch gekennzeichnet, dass** der Drehhebel (25) einen Abschnitt mit einem Langloch (14c') aufweist, in welches ein mit der Verschlussplatte (14a) starr verbundener Pin (14a') eingreift.

4. Verschlussvorrichtung (10) nach einem der Ansprüche 2 oder 3, **dadurch gekennzeichnet, dass** die Verschlussplatte (14a) rechteckig geformt ist, und dass die Umlenkelemente (14c) mindestens drei Drehhebel (25) umfassen.

5. Verschlussvorrichtung (10) nach einem der vorhergehenden Ansprüche, **dadurch gekennzeichnet, dass** die lineare Führung (13) eine Führungsschiene umfasst, die insbesondere in oder auf der Grundplatte (15) angeordnet ist.

6. Verschlussvorrichtung (10) nach einem der vorhergehenden Ansprüche, **dadurch gekennzeichnet, dass** eine vertikale Führungseinrichtung (18) zur Führung der Bewegung der Verschlussplatte (14a) in einer Richtung senkrecht zu ihrer Lateralbewegung vorhanden ist.

7. Verschlussvorrichtung (10) nach einem der vorhergehenden Ansprüche, **dadurch gekennzeichnet, dass** zwischen der Verschlussplatte (14a) und dem Schlitten (14b) Federelemente (21) angeordnet sind, mit denen die Verschlussplatte (14a) und der Schlitten (14b) auf einem bestimmten Abstand auseinandergehalten werden.

8. Verschlussvorrichtung (10) nach einem der vorhergehenden Ansprüche, **dadurch gekennzeichnet, dass** an der Verschlussplatte (14a) Anschlagbolzen (14d) angebracht sind, mit welchen die Verschlussplatte (14a) gegen einen Anschlag (15a) an oder in der Grundplatte (15) stoßen, oder vice versa.

9. Verschlussvorrichtung (10) nach einem der vorhergehenden Ansprüche, **dadurch gekennzeichnet, dass** der Antriebsmotor (16) als Elektromotor (16a), vorzugsweise als Schrittmotor (16a`) ausgeführt ist.

10. Verschlussvorrichtung (10) nach einem der vorhergehenden Ansprüche, **dadurch gekennzeichnet, dass** das Antriebsmittel (17), über welches der Antriebsmotor (16) mit dem Schlitten (14b) verbunden ist, einen Zahnriementrieb (17') und/oder eine Antriebskette und/oder eine Schubstange und/oder eine Gewindespindel und/oder einen Hydraulik-Schieber und/oder einen Pneumatik-Zylinder umfasst.

11. Verschlussvorrichtung (10) nach Anspruch 10, **dadurch gekennzeichnet, dass** der Zahnriementrieb (17') beziehungsweise die Antriebskette über eine Antriebs-Umlenkrolle (17a) sowie über eine Riemenscheibe (17b) laufen.

12. Verschlussvorrichtung (10) nach Anspruch 11, **dadurch gekennzeichnet, dass** die Antriebs-Umlenkrolle (17a) und/oder die Riemenscheibe (17b) über ein Federelement (19) gegenüber der Grundplatte (15), insbesondere gegenüber der linearen Führung (13), in Richtung des Schlittens (14b) federnd gelagert und vorzugsweise mit einer definierten Kraft gespannt sind.

13. Verschlussvorrichtung (10) nach einem der vorhergehenden Ansprüche, **dadurch gekennzeichnet, dass** die Verschlussplatte (14a) und/oder die Probenkammer (12) im Bereich um die Eingabeöffnung (11) Dichtungselemente (20) aufweisen, die insbesondere als Dichtringe (20a) und gegebenenfalls als dazu passende Nuten (20b) oder Dichtflächen als Gegenstücke ausgestaltet sind.

14. Röntgenanalysegerät (101), insbesondere ein Röntgen-Fluoreszenz-Spektrometer (101a), enthaltend eine Verschlussvorrichtung (10) nach einem der Ansprüche 1 bis 13 zum gasdichten Verschließen der Eingabeöffnung (11) einer Probenkammer (12).

15. Verfahren zum Betrieb einer Verschlussvorrichtung (10) nach einem der Ansprüche 1 bis 13 oder eines Röntgenanalysegeräts (101) nach Anspruch 14, **dadurch gekennzeichnet, dass** die Bewegungen der Verschlussplatte (14a) in einer bestimmten, vorgegebenen, nicht veränderbaren Reihenfolge ausgeführt werden.

## Claims

1. A closure device (10) for gas-tightly closing the input opening (11) in a sample chamber (12) of an x-ray analysis apparatus (101), in particular an x-ray fluorescence spectrometer (101a), by means of a slider (14) which is displaceable laterally over the input opening (11) on a linear guide (13),
**characterized**
**in that** the slider (14) comprises a closure plate (14a) and a carriage (14b) which is configured in such a manner that it can be displaced over the input opening (11) in the sample chamber (12) on the linear guide (13) which is arranged on a baseplate (15) connected fixedly to the sample chamber (12);
**in that** the closure plate (14a) is connected in an articulated manner to the carriage (14b) via deflecting elements (14c), the deflecting elements (14c) upon butting against an end stop (15a) connected rigidly to the baseplate (15) deflecting the lateral movement of the carriage (14b) into a movement perpendicular thereto in order to press the closure plate (14a) onto the input opening (11); and
**in that** the slider (14) is displaceable, driven by a motor, in a lateral movement on the linear guide (13) by a drive motor (16), which is connected to the carriage (14b) via a drive means (17).

2. The closure device (10) as claimed in claim 1, **characterized in that** at least some of the deflecting elements (14c) are configured as rotary levers (25), in particular as a, preferably curved, rigid lever (25') which is mounted on the carriage (14b) so as to be rotatable about a rigid shaft (14b').

3. The closure device (10) as claimed in claim 2, **characterized in that** the rotary lever (25) has a portion with an elongated hole (14c') in which a pin (14a') connected rigidly to the closure plate (14a) engages.

4. The closure device (10) as claimed in either of claims 2 and 3, **characterized in that** the closure plate (14a) is shaped rectangularly, and **in that** the deflecting elements (14c) comprise at least three rotary levers (25).

5. The closure device (10) as claimed in anyone of the preceding claims, **characterized in that** the linear guide (13) comprises a guide rail which is arranged in particular in or on the baseplate (15).

6. The closure device (10) as claimed in anyone of the preceding claims, **characterized in that** there is a vertical guide device (18) for guiding the movement of the closure plate (14a) in a direction perpendicular to its lateral movement.

7. The closure device (10) as claimed in anyone of the preceding claims, **characterized in that** spring elements (21) are arranged between the closure plate (14a) and the carriage (14b), said spring elements being used to hold the closure plate (14a) and the carriage (14b) apart at a determined distance.

8. The closure device (10) as claimed in anyone of the preceding claims, **characterized in that** stop bolts (14d) with which the closure plate (14a) butts against a stop (15a) on or in the baseplate (15), or vice versa, are attached to the closure plate (14a).

9. The closure device (10) as claimed in anyone of the preceding claims, **characterized in that** the drive motor (16) is designed in the form of an electric motor (16a), preferably a stepping motor (16a').

10. The closure device (10) as claimed in anyone of the preceding claims, **characterized in that** the drive means (17) via which the drive motor (16) is connected to the carriage (14b) comprises a toothed belt drive (17') and/or a drive chain and/or a push rod and/or a threaded spindle and/or a hydraulic slider and/or a pneumatic cylinder.

11. The closure device (10) as claimed in claim 10, **characterized in that** the toothed belt drive (17') or the drive chain, respectively, run via a drive deflection roller (17a) and via a belt pulley (17b).

12. The closure device (10) as claimed in claim 11, **characterized in that** the drive deflection roller (17a) and/or the belt pulley (17b) are mounted resiliently, and preferably tensioned with a defined force, in the direction of the carriage (14b) in relation to the baseplate (15), in particular in relation to the linear guide (13), via a spring element (19).

13. The closure device (10) as claimed in anyone of the preceding claims, **characterized in that** the closure plate (14a) and/or the sample chamber (12) have sealing elements (20) in the region around the input opening (11), said sealing elements being configured in particular as sealing rings (20a) and optionally as grooves (20b) suitable for them or sealing surfaces, as counterparts.

14. An x-ray analysis apparatus (101), in particular an x-ray fluorescence spectrometer (101a), containing a closure device (10) as claimed in anyone of claims 1 to 13 for gas-tightly closing the input opening (11) in a sample chamber (12).

15. A method for operating a closure device (10) as claimed in anyone of claims 1 to 13 or an x-ray analysis apparatus (101) as claimed in claim 14, **characterized in that** the movements of the closure plate (14a) are carried out in a determined, specified, non-changeable sequence.

## Revendications

1. Dispositif de fermeture (10) permettant de fermer de manière étanche au gaz l'orifice d'entrée (11) d'une chambre d'échantillon (12) d'un appareil d'analyse par rayons X (101), de manière particulièrement préférée d'un spectromètre de fluorescence X (101a), au moyen d'un obturateur (14) pouvant être déplacé de manière latérale au dessus de l'orifice d'entrée (11) sur un guidage linéaire (13),
**caractérisé en ce que**
l'obturateur (14) comprend une plaque de fermeture (14a) ainsi qu'un chariot (14b) conçu de manière à pouvoir être déplacé au dessus de l'orifice d'entrée (11) de la chambre d'échantillon (12) sur le guidage linéaire (13) agencé sur une plaque de base (15) reliée de manière fixe à la chambre d'échantillon (12) ;
la plaque de fermeture (14a) est reliée de manière articulée au chariot (14b) par l'intermédiaire d'éléments de renvoi (14c), les éléments de renvoi (14c) déviant, lorsqu'ils butent contre une butée d'extrémité (15a) reliée de manière rigide à la plaque de base (15), le mouvement latéral du chariot (14b) pour le transformer en mouvement perpendiculaire à celui-ci afin de presser la plaque de fermeture (14a) sur l'orifice d'entrée (11) ;
et l'obturateur (14) peut être déplacé sur le guidage linéaire (13) en étant entraîné de manière motorisée selon un mouvement latéral par un moteur d'entraînement (16) relié au chariot (14b) par l'intermédiaire d'un moyen d'entraînement (17).

2. Dispositif de fermeture (10) selon la revendication 1, **caractérisé en ce qu'**au moins une partie des éléments de renvoi (14c) est réalisée sous forme de levier rotatif (25), de manière particulièrement préférée sous forme de levier rigide (25'), de manière préférée incurvé, qui est mis en place au niveau du chariot (14b) de manière à pouvoir tourner autour d'un arbre (14b') rigide.

3. Dispositif de fermeture (10) selon la revendication 2, **caractérisé en ce que** le levier rotatif (25) présente une section munie d'un trou allongé (14c') dans lequel vient en prise une broche (14a') reliée de manière rigide à la plaque de fermeture (14a).

4. Dispositif de fermeture (10) selon l'une quelconque des revendications 2 ou 3, **caractérisé en ce que** la plaque de fermeture (14a) est de forme rectangulaire et **en ce que** les éléments de renvoi (14c) comprennent au moins trois leviers rotatifs (25).

5. Dispositif de fermeture (10) selon l'une quelconque des revendications précédentes, **caractérisé en ce que** le guidage linéaire (13) comprend un rail de guidage agencé de manière particulièrement préférée dans ou sur la plaque de base (15).

6. Dispositif de fermeture (10) selon l'une quelconque des revendications précédentes, **caractérisé en ce qu'**un dispositif de guidage vertical (18) permettant de guider le mouvement de la plaque de fermeture (14a) dans une direction perpendiculaire à son mouvement latéral est fourni.

7. Dispositif de fermeture (10) selon l'une quelconque des revendications précédentes, **caractérisé en ce que** des éléments élastiques (21), grâce auxquels la plaque de fermeture (14a) et le chariot (14b) sont maintenus à une certaine distance l'un de l'autre, sont agencés entre la plaque de fermeture (14a) et le chariot (14b),.

8. Dispositif de fermeture (10) selon l'une quelconque des revendications précédentes, **caractérisé en ce que** des boulons de butée (14d), grâce auxquels la plaque de fermeture (14a) vient en butée contre une butée (15a) au niveau de la plaque de base (15) ou dans celle-ci, ou inversement, sont installés au niveau de la plaque de fermeture (14a).

9. Dispositif de fermeture (10) selon l'une quelconque des revendications précédentes, **caractérisé en ce que** le moteur d'entraînement (16) est mis en oeuvre sous la forme d'un moteur électrique (16a), de manière préférée sous la forme d'un moteur pas à pas (16a').

10. Dispositif de fermeture (10) selon l'une quelconque des revendications précédentes, **caractérisé en ce que** le moyen d'entraînement (17) par l'intermédiaire duquel le moteur d'entraînement (16) est relié au chariot (14b) comprend une transmission par courroie crantée (17') et/ou une chaîne d'entraînement et/ou une tige de poussée et/ou une broche filetée et/ou un obturateur hydraulique et/ou un vérin pneumatique.

11. Dispositif de fermeture (10) selon la revendication 10, **caractérisé en ce que** la transmission par courroie crantée (17') ou la chaîne d'entraînement passe par une poulie de renvoi d'entraînement (17a) ainsi que par une poulie à courroie (17b).

12. Dispositif de fermeture (10) selon la revendication 11, **caractérisé en ce que** la poulie de renvoi d'entraînement (17a) et/ou la poulie à courroie (17b) sont montées de manière élastique en direction du chariot (14b) vis-à-vis de la plaque de base (15), en particulier vis-à-vis du guidage linéaire (13), par l'intermédiaire d'un élément à ressort (19), et sont de manière préférée mises en tension avec une force définie.

13. Dispositif de fermeture (10) selon l'une quelconque des revendications précédentes, **caractérisé en ce que** la plaque de fermeture (14a) et/ou la chambre d'échantillon (12) présentent, dans la région située autour de l'orifice d'entrée (11), des éléments d'étanchéité (20) conçus pour être leurs pendants, de manière particulièrement préférée sous la forme de bagues d'étanchéité (20a) et éventuellement sous la forme de rainures (20b), ou de surfaces d'étanchéité, adaptées à celles-ci.

14. Appareil d'analyse par rayons X (101), en particulier spectromètre de fluorescence X (101a), contenant un dispositif de fermeture (10) selon l'une quelconque des revendications 1 à 13 pour fermer de manière étanche aux gaz l'ouverture d'entrée (11) d'une chambre d'échantillon (12).

15. Procédé pour faire fonctionner un dispositif de fermeture (10) selon l'une quelconque des revendications 1 à 13 ou un appareil d'analyse par rayons X (101) selon la revendication 14, **caractérisé en ce que** les déplacements de la plaque de fermeture (14a) sont effectués dans un certain ordre prédéterminé et immuable.
